# EUROPÄISCHE PATENTSCHRIFT

(11) **EP 3 681 670 B1**
(45) Veröffentlichungstag und Bekanntmachung des Hinweises auf die Patenterteilung: **20.04.2022**
(21) Anmeldenummer: 18768817.1
(22) Anmeldetag: 04.09.2018
(51) Int. Cl.: B23Q 1/48, B23K 26/36, B23K 26/08, B23K 37/04, B23K 26/38

(54) **VORRICHTUNG ZUR AUSRICHTUNG UND POSITIONIERUNG EINES WERKSTÜCKS RELATIV ZU EINEM LASERSTRAHL EINER LASERBEARBEITUNGSMASCHINE**
DEVICE FOR ALIGNING AND POSITIONING A WORKPIECE RELATIVE TO A LASER BEAM OF A LASER PROCESSING MACHINE
DISPOSITIF POUR L'ORIENTATION ET LE POSITIONNEMENT D'UNE PIÈCE PAR RAPPORT À UN FAISCEAU LASER D'UNE MACHINE D'USINAGE AU LASER

(30) Priorität: 15.09.2017 DE 102017121526
(43) Veröffentlichungstag der Anmeldung: 22.07.2020
(73) Patentinhaber: Rollomatic S.A., 2525 Le Landeron (CH)
(72) Erfinder: KRUMM, Christian, 2607 Cortébert (CH); SCHOENENBERGER, Pascal, 2503 Bienne (CH); CANOSA, José, 2017 Boudry (CH); FREIDY, Mouhamad Ali, 1020 Renens (CH)
(74) Vertreter: Geitz Truckenmüller Lucht Christ
(86) Internationale Anmeldenummer: PCT/EP2018/073767
(87) Internationale Veröffentlichungsnummer: WO 2019/052858

(56) Entgegenhaltungen:
- EP-A1- 0 244 645
- EP-A2- 2 374 569
- WO-A1-2007/091155
- DE-A1-102014 109 613
- US-B1- 6 380 512

## Beschreibung

Die Erfindung geht aus von einer Vorrichtung zur Ausrichtung und Positionierung eines Werkstücks relativ zu einem Laserstrahl einer Laserbearbeitungsmaschine.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. In Abhängigkeit von der Leistungsdichte bildet sich an der Oberfläche des Werkstücks ein Plasma aus. Dabei wird an der Oberfläche des Werkstücks Material abgetragen. Dies wird als Laserablation bezeichnet.

Laserstrahl und Werkstück werden definiert relativ zueinander bewegt um Material innerhalb vorgegebener Bereiche des Werkstücks gezielt abzutragen und bestimmte Konturen an der Oberfläche des Werkstücks auszubilden. Hierzu gehört unter anderem das Erzeugen von Schneiden an Werkstücken. Diese werden auch als Werkzeugschneiden bezeichnet.

Eine Laserbearbeitungsmaschine ist mit einem Laserkopf ausgestattet, welcher den gepulsten Laserstrahl eines Lasers gezielt auf ein Werkstück richtet und diesen gegebenenfalls innerhalb einer vorgegebenen Pulskontur über die Oberfläche eines Werkstücks bewegt. Das Werkstück wird in einer Vorrichtung zur Ausrichtung und Positionierung angeordnet, welche bei einer Werkzeugmaschine auch als Aufspanneinrichtung bezeichnet wird. Diese Vorrichtung ist mit einer Vorrichtungsbasis, einer Werkstück-Fixiereinrichtung und einer Bewegungseinrichtung ausgestattet. Die Vorrichtungsbasis ist ortsfest angeordnet. Sie kann Teil der Maschinenbasis der Laserbearbeitungsmaschine sein. Die Werkstück-Fixiereinrichtung nimmt das Werkstück auf und spannt es fest ein, so dass sich die Position des Werkstücks relativ zur Werkstück-Fixiereinrichtung während der Bearbeitung des Werkstücks nicht verändert. Die Bewegungseinrichtung sorgt für eine Bewegung der Werkstück-Fixiereinrichtung relativ zur Vorrichtungsbasis. Da der Laserkopf der Laserbearbeitungsmaschine in Relation zu der Vorrichtungsbasis in der Regel ortsfest angeordnet ist, sorgt die Bewegungseinrichtung damit auch für eine Relativbewegung zwischen dem Laserkopf einerseits und der Werkstück-Fixiereinrichtung andererseits. Entsprechend wird dadurch ein an der Werkstück-Fixiereinrichtung eingespanntes Werkstück relativ zu einem von dem Laserkopf erzeugten Laserstrahl bewegt. Dank der durch die Bewegungseinrichtung ausgelösten Relativbewegung kann damit eine Bearbeitung eines Werkstücks an seiner gesamten Oberfläche erfolgen, soweit die Werkstückoberfläche nicht durch die Werkstück-Fixiereinrichtung abgedeckt ist. Bei der Bearbeitung wird das Werkstück mit seiner Oberfläche unter verschiedenen Winkeln gegen den Laserstrahl ausgerichtet.

Die in der DE 10 2014 109 613 A1 offenbarte Vorrichtung zum Anordnen und Ausrichten von Werkstücken weist eine Bewegungseinrichtung mit mehreren Achsen auf. Entsprechend weist die Bewegung mehrere Freiheitsgrade auf. Um die Bewegung umzusetzen ist die Bewegungseinrichtung mit mehreren Translations- und Rotationsantrieben ausgestattet. Bewegungseinrichtungen mit sechs Achsen weisen in der Regel drei Translationsantriebe auf, welche lineare Antriebskräfte entlang einer X-Achse, einer Y-Achse und einer Z-Achse erzeugen, und drei Rotationsantriebe, welche jeweils ein Drehmoment um eine DX-Achse, um eine DY-Achse und um eine DZ-Achse erzeugen. Translationsantriebe werden auch als Linearantriebe bezeichnet. Bewegungseinrichtungen mit weniger als sechs Achsen weisen eine entsprechend geringere Anzahl an Translations- oder Rotationsantrieben auf. Derartige Bewegungseinrichtungen sind aus der WO 2007/ 091155 A1, der EP 2 374 569 A2 und der US 6,380,512 B1 bekannt. Um die Bewegungen der Antriebe aufeinander abzustimmen, werden die Antriebe über eine gemeinsame Steuereinrichtung gesteuert. In der Regel sind die Antriebe CNC-gesteuert.

Die EP 0 244 645 A1 dient als Basis für die zweiteilige Form des Anspruchs 1 und offenbart eine Bohr- und Fräsmaschine mit einer Werkzeugspindel und einem Werkstücktisch, der mit einer am Maschinenkörper beweglich angeordneten Konsole und einem an der Konsole um eine Schwenkachse drehbar angeordneten Zwischenträger ausgestattet ist. An dem Zwischenträger ist ein Tischsockel in einer Verschieberichtung z verschiebbar aufgenommen, wobei die Verschieberichtung zur Schwenkachse senkrecht ist. An dem Tischsockel ist eine Tischplatte um eine Drehachse drehbar angeordnet. Dabei verläuft die Drehachse der Tischplatte senkrecht zu der Schwenkachse. Senkrecht zur Drehachse ist an der Tischplatte eine Aufspannfläche für das Werkstück aufgenommen. Der Zwischenträger ist dabei in Verschieberichtung des Tischsockels radial nach außen geneigt. Dadurch wird erreicht, dass die Aufspannfläche etwa in einer die Schwenkachse enthaltenden Ebene liegt. Bei einer Verschiebung des Tischsockels in Verschieberichtung z bleibt dabei die zu bearbeitende Oberfläche eines an der Aufspannfläche angeordneten Werkstücks stets etwa in Flucht mit einem Ablesekopf, welcher zusammen mit einem Maßstab an der Konsole angeordnet ist. Messort und Bearbeitungsort sollen dadurch möglichst nahe beieinander liegen, so dass Messfehler aufgrund großer Abstände vermieden werden und eine hohe Positioniergenauigkeit schwerer Werkstücke bei verhältnismäßig geringem Lagerungs- und Antriebsaufwand erreicht wird.

Werden mit den bekannten Vorrichtungen längliche Werkstücke bearbeitet, aus denen beispielsweise Bohrer oder Fräser hergestellt werden, und weist das Werkstück aufgrund seines Einsatzgebietes eine große axiale Länge von mehreren Dezimetern auf, so sind die Strecken, um die die Bewegungseinrichtung die Werkstück-Fixiereinrichtung und ein daran eingespanntes Werkstück bewegen muss, erheblich. Insbesondere müssen die einzelnen Translations- und Rotationsantriebe die ihnen zugeordneten Schlitten, Konsolen oder sonstige angetriebenen Teile über große Distanzen bewegen. Bei großen Strecken sind in der Regel große Beschleunigungen notwendig. Große Beschleunigungen sind jedoch von Nachteil, da die Antriebe hierzu große Antriebskräfte oder Drehmomente erzeugen müssen.

Der Erfindung liegt die Aufgabe zugrunde, eine Vorrichtung zur Anordnung und Ausrichtung eines Werkstücks zur Verfügung zu stellen, die es ermöglicht, Werkstücke mit großer axialer Länge relativ zu einem Laserstrahl zu bewegen, so dass eine Bearbeitung des Werkstücks im wesentlichen an seiner gesamten Oberfläche möglich ist, ohne dass hierzu große Beschleunigungen und große Antriebskräfte oder Drehmomente der zugehörigen Antriebe notwendig sind. Diese Aufgabe wird mit einer Vorrichtung nach Anspruch 1 gelöst. Die Vorrichtung zeichnet sich dadurch aus, dass die Bewegungseinrichtung mit einem ersten Rotationsantrieb mit einer Rotationsachse B, einem ersten Linearantrieb mit einer linearen Achse Xw, welche im wesentlichen radial zur Rotationsachse B verläuft, und mit einem zweiten Rotationsantrieb mit einer Rotationsachse C ausgestattet ist, welche von B verschieden ist. Die Bewegungseinrichtung weist einen starren Körper auf. Der erste Rotationsantrieb treibt mit seinem Drehmoment den starren Körper um die Rotationsachse B relativ zur Maschinenbasis zur Rotation an. Dabei steht der starre Körper radial nach außen von der Rotationsachse B ab. Der erste Linearantrieb ist an dem starren Körper angeordnet. Der erste Linearantrieb erzeugt eine lineare Antriebskraft entlang einer radial zur Achse B verlaufenden Achse Xw und verschiebt dabei einen ersten Schlitten entlang der Achse Xw an der Oberfläche des starren Körpers. An dem ersten Schlitten ist der zweite Rotationsantrieb angeordnet. Mit seinem Drehmoment treibt der zweite Rotationsantrieb die Werkstück-Fixiereinrichtung um die Rotationsachse C zur Rotation relativ zur Vorrichtungsbasis an. Der starre Körper ist länglich ausgebildet. Er erstreckt sich entlang einer Längsachse. Dabei ist der starre Körper derart an dem ersten Rotationsantrieb aufgenommen, dass seine Längsachse in radialer Richtung zu der Rotationsachse B verläuft.

Die Werkstück-Fixiereinrichtung nimmt ein längliches Werkstück an seinem einen Ende auf und spannt dieses Ende ein. Hierzu weist die Werkstück-Fixiereinrichtung einen längliche Werkstück-Aufnahme auf, welche sich entlang einer linearen Werkstück-Aufnahme-Achse erstreckt. Die Werkstück-Fixiereinrichtung ist bevorzugt derart an dem zweiten Rotationsantrieb angeordnet, dass die Werkstück-Aufnahme-Achse koaxial zu der Rotationsachse C verläuft. Wird ein Werkstück mit seiner Werkstück-Längsachse koaxial zu der Werkstück-Aufnahme-Achse in der Werkstück-Fixiereinrichtung angeordnet, sorgt der zweite Rotationsantrieb für eine Rotation des Werkstücks um seine Längsachse.

Der erste Linearantrieb ermöglicht ein Verschieben eines in der Werkstück-Fixiereinrichtung angeordneten Werkstücks. Das Verschieben erfolgt bevorzugt in einer Richtung, in der eine Bearbeitung an der Oberfläche des Werkstücks vorgesehen ist. So kann die lineare Achse Xw beispielsweise parallel zu der Rotationsachse C verlaufen. In diesem Fall kann ein in die Werkstück-Fixiereinrichtung eingespanntes Werkstück entlang seiner Längsachse verschoben werden. Dies gilt auch bei Werkstücken, die eine große axiale Ausdehnung von mehreren Dezimetern aufweisen. Auf diese Weise kann das Werkstück allein durch eine Bewegung entlang der linearen Achse Xw und um die Rotationsachse C zeitlich nacheinander mit seiner gesamten Oberfläche zu dem Laserstrahl ausgerichtet werden, so dass eine Bearbeitung der gesamten Oberfläche mit dem Laser erfolgen kann. Eine Rotation um die Rotationsachse B sorgt zusätzlich für eine Ausrichtung des Werkstücks unter verschiedenen Winkeln relativ zum Laserstrahl.

Somit wird mit der erfindungsgemäßen Vorrichtung eine Ausrichtung eines Werkstücks ermöglicht, bei der zwischen den einzelnen Bearbeitungsschritten keine großen Wege zurückgelegt werden müssen. Dies gilt auch für den starren Körper, der mit dem ersten Rotationsantrieb bewegt wird, für den ersten Schlitten, der mit dem ersten Linearantrieb bewegt wird und für die Fixiereinrichtung, die mit dem zweiten Rotationsantrieb bewegt wird. Die Verstellwege der Komponenten, welche dem ersten Rotationsantrieb, dem ersten Linearantrieb und dem zweiten Rotationsantrieb zugeordnet sind, sind kurz. Somit sind bei der erfindungsgemäßen Vorrichtung keine großen Beschleunigungen und keine großen Kräfte oder Drehmomente notwendig.

Nach einer vorteilhaften Ausgestaltung der Erfindung verläuft die Achse C in einer zur Achse B senkrechten Ebene.

Nach einer weiteren vorteilhaften Ausgestaltung der Erfindung ist die Achse C zu der Achse Xw parallel.

Nach einer weiteren vorteilhaften Ausgestaltung der Erfindung ist der starre Körper als Hebel ausgebildet. Besonders bevorzugt ist der Hebel ein einarmiger Hebel. Dieser erstreckt sich bevorzugt entlang des linearen Verschiebewegs des ersten Schlittens und stützt diesen bei seiner Bewegung ab. Der Hebel kann als länglicher Arm ausgebildet sein.

Nach einer weiteren vorteilhaften Ausgestaltung der Erfindung ist der starre Körper parallel zu der linearen Achse Xw mit einer Führungsschiene ausgestattet, entlang der der erste Schlitten geführt ist. Die Führungsschiene sorgt dafür, dass der erste Schlitten bei seiner Bewegung entlang der linearen Achse Xw abgestützt ist.

Nach einer weiteren vorteilhaften Ausgestaltung der Erfindung weist die Bewegungseinrichtung einen zweiten Linearantrieb auf, der eine Antriebskraft entlang einer linearen Achse Z erzeugt und einen zweiten Schlitten relativ zur Maschinenbasis entlang der Achse Z bewegt. In bevorzugter Weise ist der erste Roationsantrieb derart mittelbar oder unmittelbar an dem zweiten Schlitten angeordnet, dass die Kombination aus erstem Rotationsantrieb, erstem Linearantrieb, zweitem Rotationsantrieb und Fixiereinrichtung insgesamt relativ zu der Vorrichtungsbasis und damit relativ zu einem Laserstrahl entlang der Achse Z verschoben werden kann. In bevorzugter Weise verläuft die Achse Z parallel zu der Strahlachse des Laserstrahls der Laserbearbeitungsmaschine. Der zweite Linearantrieb kann an der Maschinenbasis angeordnet sein. Es besteht jedoch auch die Möglichkeit, den zweiten Linearmotor an dem zweiten Schlitten anzuordnen. Der zweite Linearantrieb kann auch als Linearmotor ausgebildet sein, wobei der Stator mit der Vorrichtungsbasis verbunden ist und der Rotor mit dem zweiten Schlitten.

Nach einer weiteren vorteilhaften Ausgestaltung der Erfindung weist die Bewegungseinrichtung einen an dem zweiten Schlitten angeordneten dritten Linearantrieb auf, der eine Antriebskraft entlang einer linearen Achse Y erzeugt und einen dritten Schlitten relativ zum zweiten Schlitten entlang der Achse Y bewegt, wobei die Achse Y von der Achse Z verschieden ist. Damit wird der dritte Schlitten auch relativ zur Maschinenbasis entlang der Achse Y verschoben. Der dritte Linearantrieb kann an dem zweiten Schlitten angeordnet sein. Alternativ kann der dritte Linearantrieb an dem dritten Schlitten angeordnet sein. Der dritte Linearantrieb kann auch als Linearmotor ausgebildet sein, wobei der Stator mit dem zweiten Schlitten und der Rotor mit dem dritten Schlitten oder umgekehrt verbunden ist.

Nach einer weiteren vorteilhaften Ausgestaltung der Erfindung weist die Bewegungseinrichtung einen an dem dritten Schlitten angeordneten vierten Linearantrieb auf, der eine Antriebskraft entlang einer linearen Achse X erzeugt und einen vierten Schlitten relativ zum dritten Schlitten entlang der Achse X bewegt, wobei die Achse X von der Achse Z und von der Achse Y verschieden ist. In bevorzugter Weise ist der erste Roationsantrieb an dem vierten Schlitten angeordnet, so dass die Kombination aus erstem Rotationsantrieb, erstem Linearantrieb, zweitem Rotationsantrieb und Fixiereinrichtung insgesamt relativ zu der Vorrichtungsbasis und damit relativ zu einem Laserstrahl entlang der Achsen Z, Y und X verschoben werden kann. In diesem Fall weist die Bewegung der Bewegungseinrichtung vier translatorische und zwei rotatorische Freiheitsgrade auf. Die Bewegung erfolgt entlang der vier linearen Achsen Z, Y, X und Xw und entlang der zwei Rotationsachsen B und C. Der vierte Linearantrieb kann an dem dritten Schlitten angeordnet sein. Alternativ kann der vierte Linearantrieb an dem vierten Schlitten angeordnet sein. Der vierte Linearantrieb kann auch als Linearmotor ausgebildet sein, wobei der Stator mit dem dritten Schlitten und der Rotor mit dem vierten Schlitten oder umgekehrt verbunden ist.

Nach einer weiteren vorteilhaften Ausgestaltung der Erfindung sind die Achsen X, Y, und Z senkrecht zueinander.

Nach einer weiteren vorteilhaften Ausgestaltung der Erfindung ist die erste Rotationseinheit an dem vierten Schlitten angeordnet.

Nach einer weiteren vorteilhaften Ausgestaltung der Erfindung ist die Achse B im wesentlichen parallel zu einer der Achsen X, Y oder Z.

Nach einer weiteren vorteilhaften Ausgestaltung der Erfindung sind die Antriebe aller Achsen CNC-gesteuert. Die Steuerung sorgt dafür, dass alle Antriebe aufeinander abgestimmt sind und das Werkstück durch die Bewegung der Antriebe exakt in einer vorgegebenen zeitlichen Abfolge relativ zu dem Laserstrahl 3 ausgerichtet wird, um eine gewünschte Kontur an der Oberfläche des Werkstücks zu erzeugen.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel der erfindungsgemäßen Vorrichtung dargestellt und im folgenden erläutert. Es zeigen:
- Figur 1: perspektivische Darstellung einer Vorrichtung zur Ausrichtung und Positionierung, wobei der starre Körper senkrecht nach unten ausgerichtet ist und der erste Schlitten in seiner der Rotationsachse B entferntesten Stellung ist,
- Figur 2: Vorrichtung nach Figur 1 in perspektivischer Darstellung wobei der erste Schlitten in einer gegenüber Figur 1 der Rotationsachse B näheren Position angeordnet ist,
- Figur 3: Vorrichtung nach Figur 1 in einer Stellung der Bewegungseinrichtung gemäß Figur 1 in einer Ansicht von vorne,
- Figur 4: Vorrichtung nach Figur 1 in einer Stellung der Bewegungseinrichtung gemäß Figur 2 in einer Ansicht von vorne,
- Figur 5: Vorrichtung nach Figur 1 in einer Stellung der Bewegungseinrichtung gemäß Figur 1 in einer Ansicht von der Seite,
- Figur 6: Vorrichtung nach Figur 1 in einer Stellung der Bewegungseinrichtung gemäß Figur 2 in einer Ansicht von der Seite,
- Figur 7: Vorrichtung gemäß Figur 1 in einer Ansicht von der Seite, wobei der starre Körper im Uhrzeigersinn um einen Winkel von 45° gegenüber der Position in Figur 1 gedreht ist und der erste Schlitten in seiner der Rotationsachse B entferntesten Stellung ist,
- Figur 8: Vorrichtung gemäß Figur 1 in einer Ansicht von der Seite, wobei der starre Körper im Uhrzeigersinn um einen Winkel von 45° gegenüber der Position in Figur 1 gedreht ist und der erste Schlitten in einer gegenüber Figur 7 der Rotationsachse B näheren Position angeordnet ist,
- Figur 9: Vorrichtung gemäß Figur 1 in einer Ansicht von der Seite, wobei der starre Körper entgegen dem Uhrzeigersinn um einen Winkel von 45° gegenüber der Position in Figur 1 gedreht ist und der erste Schlitten in seiner der Rotationsachse B entferntesten Stellung ist,
- Figur 10: Vorrichtung gemäß Figur 1 in einer Ansicht von der Seite, wobei der starre Körper entgegen dem Uhrzeigersinn um einen Winkel von 45° gegenüber der Position in Figur 1 gedreht ist und der erste Schlitten in einer gegenüber Figur 7 der Rotationsachse B näheren Position angeordnet ist,
- Figur 11: Vorrichtung gemäß Figur 1 in der Stellung der Bewegungseinrichtung gemäß Figur 1 in einer Ansicht von oben.

### Beschreibung des Ausführungsbeispiels

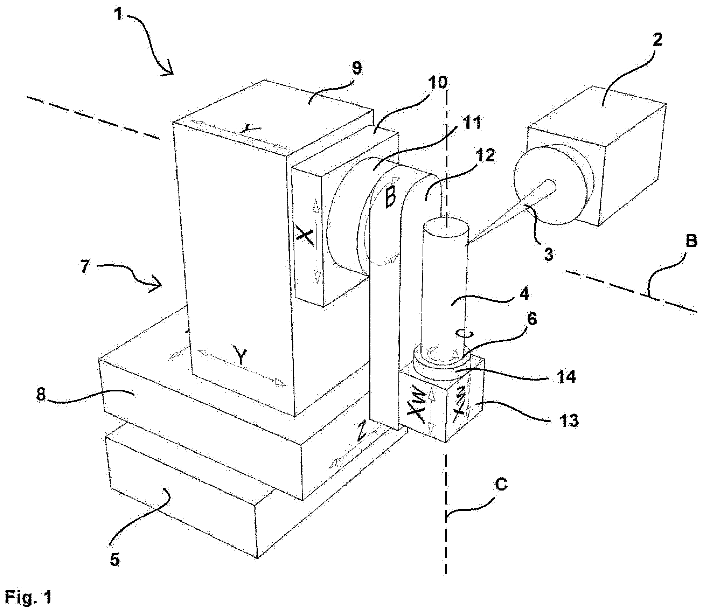

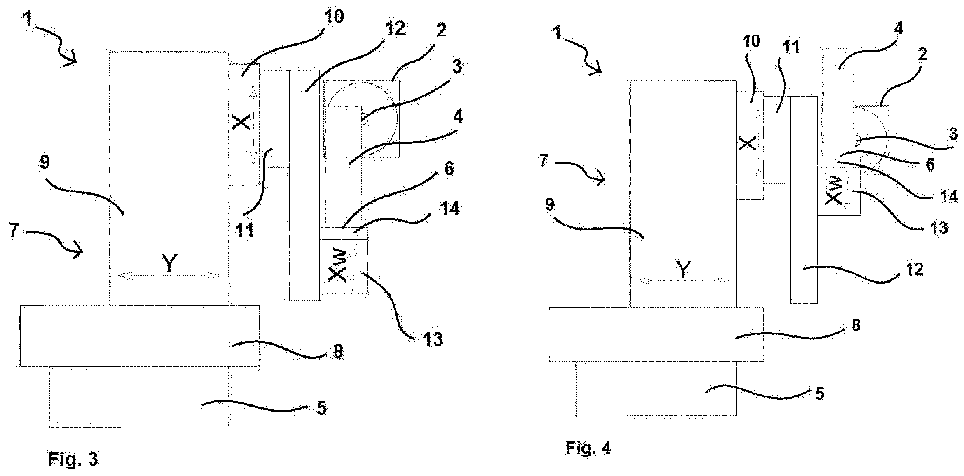

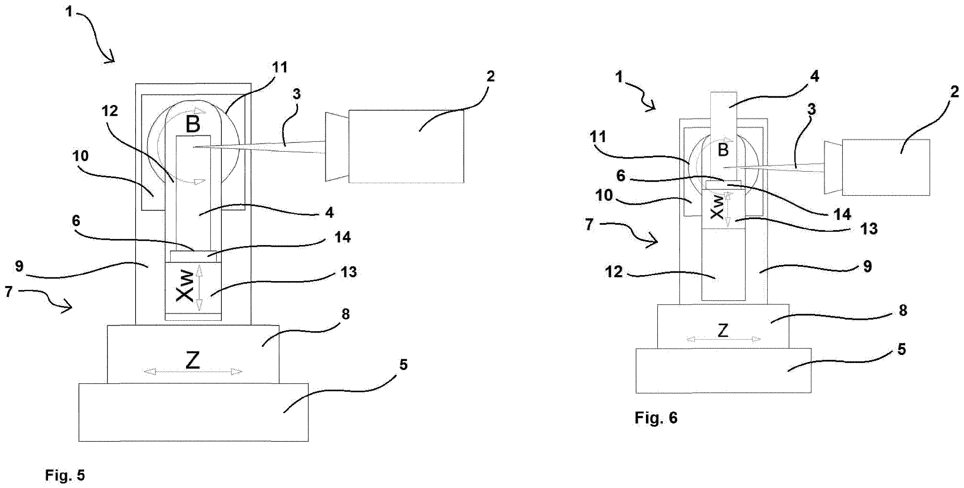

In den Figuren 1 bis 11 ist eine Vorrichtung zur Ausrichtung und Positionierung 1 eines Werkstücks 4 relativ zu einem Laserstrahl 3 dargestellt. Der Laserstrahl wird von einem Laserkopf 2 einer nicht weiter dargestellten Laserbearbeitungsmaschine auf die Oberfläche des Werkstücks 4 gerichtet. Die Vorrichtung zur Ausrichtung und Positionierung 1 weist eine ortsfest angeordnete Vorrichtungsbasis 5, eine Werkstück-Fixiereinrichtung 6, welche das Werkstück 4 aufnimmt und festspannt, und eine Bewegungseinrichtung 7 auf. Die Bewegungseinrichtung bewegt die Werkstück-Fixiereinrichtung 6 relativ zu der Vorrichtungsbasis 5 um zwei Rotationsachsen B und C und entlang von vier linearen Achsen Xw, X, Y und Z. Ein in der Zeichnung nicht dargestellter zweiter Linearantrieb bewegt einen zweiten Schlitten 8 entlang der Achse Z relativ zu der Vorrichtungsbasis vor und zurück. Ein in der Zeichnung nicht dargestellter dritter Linearantrieb bewegt einen dritten Schlitten 9 entlang der Achse Y relativ zu dem zweiten Schlitten 8 vor und zurück. Ein in der Zeichnung nicht dargestellter vierter Linearantrieb bewegt einen vierten Schlitten 10 entlang der Achse X relativ zu dem dritten Schlitten 9 vor und zurück. An dem vierten Schlitten 10 ist ein erster Rotationsantrieb 11 angeordnet, der ein Drehmoment um eine Achse B erzeugt, welche parallel zu der Achse Y und senkrecht zu den Achsen X und Z verläuft. Eine in der Zeichnung nicht erkennbare Antriebswelle der ersten Rotationsantriebs 11 ist mit dem als einarmiger Hebel ausgebildeten starren Körper 12 drehfest verbunden. Der starre Körper 12 steht von der Rotationsachse B radial nach außen ab. Die Antriebswelle überträgt das Drehmoment des ersten Rotationsantriebs 11 auf den starren Körper 12 und sorgt damit für eine Rotation des starren Körpers 12 um die Rotationsachse B. An dem starren Körper 12 ist ein in der Zeichnung nicht dargestellter erster Linearantrieb abgeordnet, der eine lineare Antriebskraft entlang der linearen Achse Xw erzeugt und einen ersten Schlitten 13 entlang der Achse Xw hin und her bewegt. Dabei verläuft die Achse Xw in radialer Richtung zu der Rotationsachse B. Die Achse Xw erstreckt sich in einer zur Rotationsachse B senkrechten Ebene. An dem ersten Schlitten 13 ist ein zweiter Rotationsantrieb 14 angeordnet. Er erzeugt ein Drehmoment um eine Rotationsachse C. Dabei ist die Rotationsachse C parallel zu der linearen Achse Xw. Die Rotationsachse verläuft in einer zu der Rotationsachse B senkrechten Ebene. Der zweite Rotationsantrieb dreht die Werkstück-Fixiereinrichtung 6 und damit das in der Werkstück-Fixiereinrichtung 6 aufgenommene Werkstück 4 um die Rotationsachse C.

Der Laserstrahl 3 ist mit seiner Strahlachse parallel zu der linearen Achse Z ausgerichtet. Eine Verschiebung des zweiten Schlittens entlang der Achse Z führt damit zu einer Bewegung der Werkstück-Fixiereinrichtung 6 auf den Laserkopf 2 zu oder von diesem weg. Über den zweiten Linearantrieb und eine Bewegung des zweiten Schlittens 8 kann der Abstand des Werkstücks 4 zu dem Laserkopf 2 eingestellt werden.

Das Werkstück 4 ist länglich. Es ist derart in die Werkstück-Fixiereinrichtung 6 aufgenommen, dass eine Längsachse des Werkstücks 4 koaxial zu der Rotationsachse C verläuft. Der zweite Rotationsantrieb 14 sorgt damit für eine Rotation des Werkstücks 4 um seine eigene Längsachse.

In den Figuren 1, 3 und 5 ist die Bewegungseinrichtung 7 so ausgerichtet, dass der starre Körper 12 vertikal nach unten weist und sich der erste Schlitten 13 in seiner Position mit der größten Entfernung zur Rotationsachse B befindet. In dieser Stellung kann das Werkstück 4 an seinem der Werkstück-Fixiereinrichtung 6 abgewandten Ende bearbeitet werden.

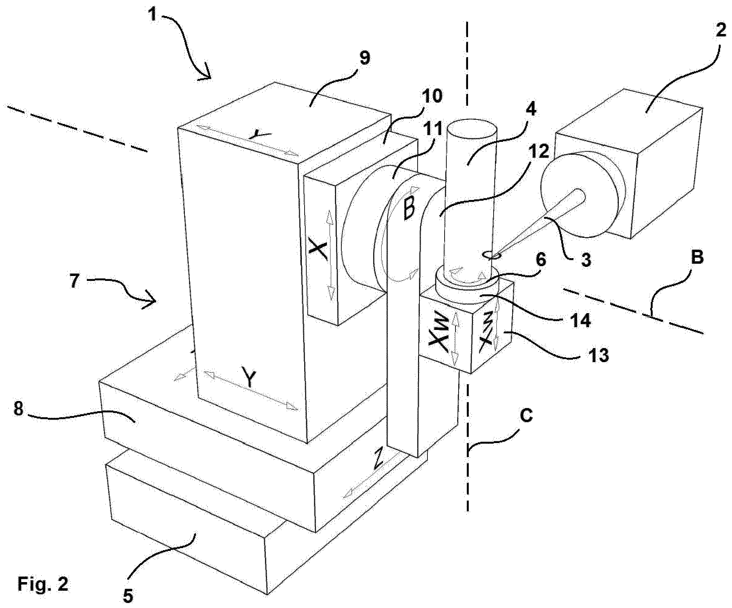

In den Figuren 2, 4 und 6 ist die Bewegungseinrichtung 7 so ausgerichtet, dass der starre Körper 12 vertikal nach unten weist und sich der erste Schlitten 13 in einer Position befindet, die im Vergleich zu der Stellung gemäß Figuren 1, 3 und 5 näher an der Rotationsachse B ist. In dieser Stellung des ersten Schlittens kann das Werkstück 4 an seinem der Werkstück-Fixiereinrichtung 6 zugewandten Ende mit dem Laser bearbeitet werden.

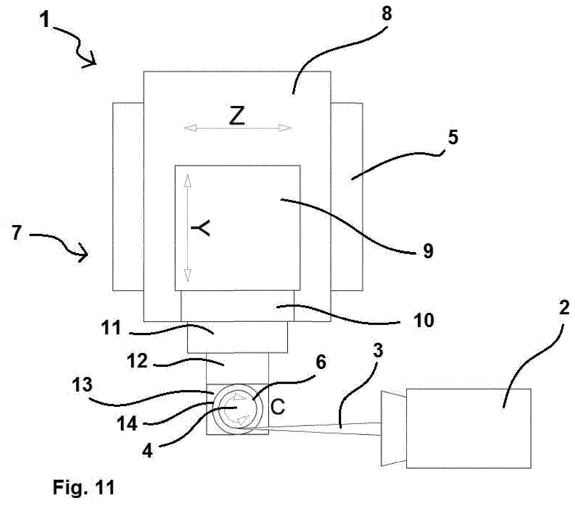

Aus dem Vergleich zwischen den beiden in den Figuren 1, 3 und 5 einerseits und in den Figuren 2, 4 und 6 andererseits dargestellten Positionen ergibt sich, dass der Verschiebeweg, den der erste Schlitten 13 entlang der linearen Achse Xw zurücklegt, im wesentlichen der Distanz entlang der Längsachse des Werkstücks 4 entspricht, über die eine Bearbeitung der Werkstückoberfläche mit dem Laserstrahl 3 erfolgen soll. Aus der Darstellung der Vorrichtung 1 in einer Ansicht von oben gemäß Figur 11 ergibt sich darüber hinaus zusammen mit den Figuren 1 bis 6, dass über eine Rotation des Werkstücks 4 um die Rotationsachse C und eine Translation entlang der linearen Achse Xw die Oberfläche des Werkstücks 4 über eine Distanz, welche durch den Verschiebeweg entlang der Achse Xw vorgegeben ist, zum Laserstrahl 3 derart ausgerichtet werden kann, dass eine Bearbeitung der gesamten Oberfläche des Werkstücks 4 erfolgen kann.

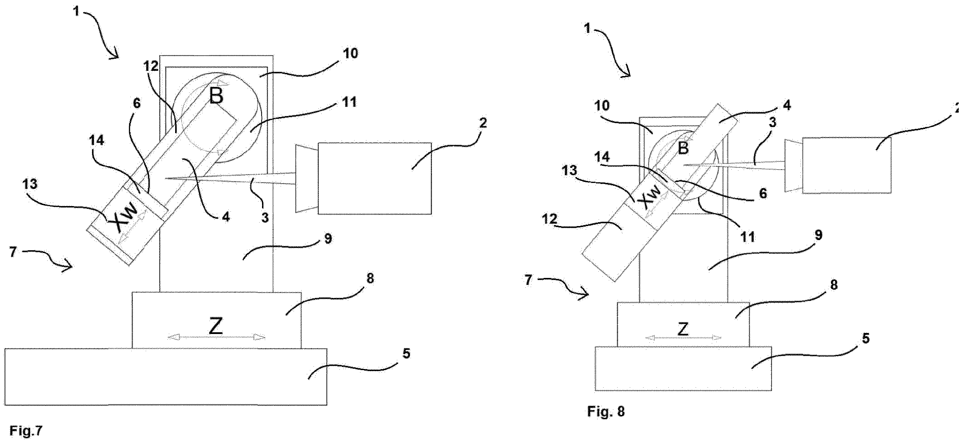

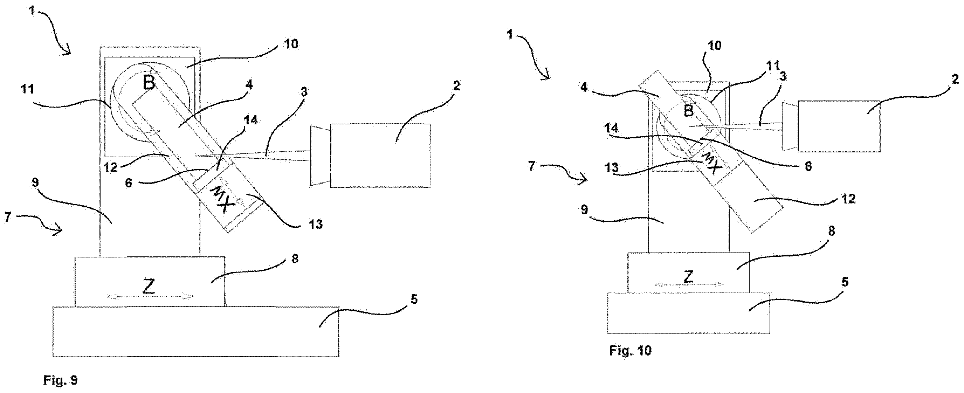

In den Figuren 7 bis 10 sind verschiedene Stellungen des starren Körpers 12 dargestellt. Dabei zeigen die Figuren 7 und 8 eine gegenüber den Figuren 1 bis 6 nach links um einen Winkel von 45° gedrehten starren Körper 12. Die Figuren 9 und 10 zeigen den starren Körper 12 in einer gegenüber den Figuren 1 bis 6 nach rechts um einen Winkel von 45° gedrehten Stellung. Dabei befindet sich in den Figuren 7 und 9 der erste Schlitten 13 in seiner Stellung mit der größtmöglichen Entfernung von der Rotationsachse B. In den Figuren 8 und 10 weist der erste Schlitten 13 dagegen eine Stellung auf, die näher an der Rotationsachse B ist. Die Darstellungen zeigen, dass durch eine Rotation des starren Körpers 12 um die Rotationsachse B der Winkel zwischen der Oberfläche des Werkstücks 4 und dem Laserstrahl 3 eingestellt werden kann.

In den Figuren 1 bis 6 ist der starre Körper 12 parallel zu der linearen Achse X ausgerichtet. In dieser Stellung sind die lineare Achse Xw und die lineare Achse X parallel zueinander. In dieser Stellung kann das Werkstück 4 nicht nur über eine Translation entlang der Achse Xw sondern auch durch eine Translation entlang der Achse X über eine Distanz parallel zur Werkstück-Längsachse zum Laserstrahl ausgerichtet werden. Die Stellungen des starren Körpers 12 gemäß den Figuren 7 bis 10 zeigen jedoch, dass eine entsprechende Einstellung des Werkstücks über eine Distanz parallel zur Längsachse über die Achse X alleine nicht mehr möglich ist, wenn das Werkstück 4 um die Rotationsachse B gedreht ist. Hierbei führt die Translation entlang der linearen Achse Xw zu einer erheblichen Vereinfachung.

Figur 11 zeigt die Vorrichtung 1 mit dem Laserkopf 2, dem Laserstrahl 3 und dem Werkstück 4 von oben. Die Darstellung zeigt, dass über eine Bewegung des dritten Schlittens 9 entlang der linearen Achse Y eingestellt werden kann, ob der Laserstrahl 3 am Rand des Werkstücks im wesentlichen tangential oder eher mittig und damit eher in radialer Richtung bezogen auf die Längsachse des Werkstücks oder in einer Position dazwischen auf die Oberfläche des Werkstücks 4 trifft.

Die Antriebe werden über eine gemeinsame Steuerung derart gesteuert, dass das Werkstück 4 gezielt relativ zu dem Laserstrahl 3 bewegt wird, so dass eine vorgegebene Oberflächenkontur durch Laserablation erzeugt wird. Hierbei handelt es sich um eine CNC-Steuerung. Die Steuerung ist in der Zeichnung nicht dargestellt.

### Bezugszahlen

- 1: Vorrichtung zur Positionierung und Ausrichtung eines Werkstücks
- 2: Laserkopf
- 3: Laserstrahl
- 4: Werkstück
- 5: Vorrichtungsbasis
- 6: Fixiereinrichtung
- 7: Bewegungseinrichtung
- 8: zweiter Schlitten
- 9: dritter Schlitten
- 10: vierter Schlitten
- 11: erster Rotationsantrieb
- 12: starrer Körper
- 13: erster Schlitten
- 14: zweiter Rotationsantrieb

## Patentansprüche

1. Vorrichtung zur Ausrichtung und Positionierung eines Werkstücks (4) relativ zu einem Laserstrahl (3) einer Laserbearbeitungsmaschine,
mit einer Vorrichtungsbasis (5),
mit einer Werkstück-Fixiereinrichtung (6), welche das zu bearbeitende Werkstück (4) aufnimmt,
mit einer mindestens drei Achsen aufweisenden Bewegungseinrichtung (7), welche die Werkstück-Fixiereinrichtung (6) relativ zu der Vorrichtungsbasis (5) bewegt,
mit einem starren Körper (12) der Bewegungseinrichtung (7),
mit einem ersten Rotationsantrieb der Bewegungseinrichtung (7), der ein Drehmoment um eine Rotationsachse B erzeugt und den starren Körper (12) um die Rotationsachse B relativ zur Maschinenbasis (5) zur Rotation antreibt, wobei der starre Körper (12) von der Rotationsachse B radial nach außen absteht,
mit einem an dem starren Körper (12) angeordneten ersten Schlitten (13),
mit einem an dem ersten Schlitten (13) angeordneten zweiten Rotationsantrieb (14), der ein Drehmoment um eine von der Rotationsachse B verschiedene Rotationsachse C erzeugt und die Werkstück-Fixiereinrichtung (6) um die Rotationsachse C zur Rotation antreibt
**dadurch gekennzeichnet,**
**dass** ein an dem starren Körper (12) angeordneter erster Linearantrieb vorgesehen ist, welcher eine lineare Antriebskraft entlang einer im wesentlichen radial zur Rotationsachse B verlaufenden Achse Xw erzeugt und den ersten Schlitten (13) an dem starren Körper (12) entlang der Achse Xw verschiebt,
**dass** der starre Körper (12) länglich ausgebildet ist und sich entlang einer Längsachse erstreckt, und
**dass** der starre Körper (12) derart an dem ersten Rotationsantrieb aufgenommen ist, dass seine Längsachse in radialer Richtung zu der Rotationsachse B verläuft.

2. Vorrichtung nach Anspruch 1, **dadurch gekennzeichnet, dass** die Achse C in einer zur Achse B senkrechten Ebene verläuft.

3. Vorrichtung nach Anspruch 1 oder 2, **dadurch gekennzeichnet, dass** die Achse C zu der Achse Xw parallel ist.

4. Vorrichtung nach einem der vorhergehenden Ansprüche, **dadurch gekennzeichnet, dass** der starre Körper (12) als Hebel ausgebildet ist.

5. Vorrichtung nach einem der vorhergehenden Ansprüche, **dadurch gekennzeichnet, dass** der starre Körper (12) mit einer Führungsschiene ausgestattet ist, entlang der der erste Schlitten (13) geführt ist.

6. Vorrichtung nach einem der vorhergehenden Ansprüche, **dadurch gekennzeichnet, dass** die Bewegungseinrichtung (7) einen zweiten Linearantrieb aufweist, der eine Antriebskraft entlang einer linearen Achse Z erzeugt und einen zweiten Schlitten (8) relativ zur Maschinenbasis (5) entlang der Achse Z bewegt.

7. Vorrichtung nach Anspruch 6, **dadurch gekennzeichnet, dass** die Bewegungseinrichtung (7) einen dritten Linearantrieb aufweist, der eine Antriebskraft entlang einer linearen Achse Y erzeugt und einen dritten Schlitten (9) relativ zum zweiten Schlitten (8) entlang der Achse Y bewegt, wobei die Achse Y von der Achse Z verschieden ist.

8. Vorrichtung nach Anspruch 7, **dadurch gekennzeichnet, dass** die Bewegungseinrichtung (7) einen vierten Linearantrieb aufweist, der eine Antriebskraft entlang einer linearen Achse X erzeugt und einen vierten Schlitten (10) relativ zum dritten Schlitten entlang der Achse X bewegt, wobei die Achse X von der Achse Z und von der Achse Y verschieden ist.

9. Vorrichtung nach Anspruch 8, **dadurch gekennzeichnet, dass** die Achsen X, Y, und Z senkrecht zueinander sind.

10. Vorrichtung nach Anspruch 8 oder 9, **dadurch gekennzeichnet, dass** die erste Rotationseinheit (11) an dem vierten Schlitten (10) angeordnet ist.

11. Vorrichtung nach Anspruch 6, **dadurch gekennzeichnet, dass** die Achse B im Wesentlichen parallel zu einer der Achsen X, Y oder Z ist.

12. Vorrichtung nach einem der vorhergehenden Ansprüche, **dadurch gekennzeichnet, dass** die Antriebe aller Achsen CNC-gesteuert sind.

## Claims

1. Device for aligning and positioning a workpiece (4) relative to a laser beam (3) of a laser processing machine,
with an apparatus base (5),
with a workpiece locating device (6) which receives the workpiece (4) to be processed,
with a movement device (7) comprising at least three axes which moves the workpiece locating device (6) relative to the apparatus base (5),
with a rigid body (12) of the movement device (7),
with a first rotary drive of the movement device (7) which generates a torque around an axis of rotation B and drives the rigid body (12) to rotate around the axis of rotation B relative to the machine base (5), whereby the rigid body (12) protrudes radially outwards from the axis of rotation B,
with a first carriage (13) arranged on the rigid body (12) with a second rotary drive (14) arranged on the first carriage (13) and which generates a torque around an axis of rotation C differing from the axis of rotation B and drives the workpiece locating device (6) to rotate around the axis of rotation C,
**characterized in that**
a first linear drive arranged on the rigid body (12) is provided, which generates a linear driving force along an axis Xw running essentially radially with respect to the axis of rotation B and displaces the first carriage (13) on the rigid body (12) along the axis Xw,
the rigid body (12) is elongated and extends along a longitudinal axis, and the rigid body (12) is accommodated on the first rotary drive in such a way that its longitudinal axis runs in the radial direction with respect to the axis of rotation B.

2. Device according to claim 1, **characterised in that** the axis C runs on a plane perpendicular to the axis B.

3. Device according to claim 1 or 2, **characterised in that** the axis C is parallel to the axis Xw.

4. Device according to one of the previous claims, **characterised in that** the rigid body (12) takes the form of a lever.

5. Device according to one of the previous claims, **characterised in that** the rigid body (12) is equipped with a guide rail along which the first carriage (13) is led.

6. Device according to one of the previous claims, **characterised in that** the movement device (7) comprises a second linear drive which generates a driving force along a linear axis Z and moves a second carriage (8) along the axis Z relative to the machine base (5).

7. Device according to claim 6, **characterised in that** the movement device (7) comprises a third linear drive which generates a driving force along a linear axis Y and moves a third carriage (9) along the axis Y relative to the second carriage (8), whereby the axis Y is different from the axis Z.

8. Device according to claim 7, **characterised in that** the movement device (7) comprises a fourth linear drive which generates a driving force along a linear axis X and moves a fourth carriage (10) along the axis X relative to the third carriage, whereby the axis X is different from the axis Z and from the axis Y.

9. Device according to claim 8, **characterised in that** the axes X, Y and Z are perpendicular to one another.

10. Device according to claim 8 or 9, **characterised in that** the first rotary drive (11) is arranged on the fourth carriage (10).

11. Device according to claim 6, **characterised in that** the axis B is essentially parallel to one of the axes X, Y or Z.

12. Device according to one of the previous claims, **characterised in that** the drives of all axes are controlled by CNC.

## Revendications

1. Dispositif pour l'orientation et le positionnement d'une pièce (4) par rapport à un faisceau laser (3) d'une machine d'usinage au laser,
avec une base de dispositif (5),
avec un système de fixation de pièce (6), réceptionnant la pièce (4) à usiner,
avec un système de déplacement (7) présentant au moins trois axes, qui meut le système de fixation de pièce (6) par rapport à la base de dispositif (5),
avec un corps rigide (12) du système de déplacement (7),
avec un premier entraînement de rotation du système de déplacement (7), qui génère un couple autour d'un axe de rotation B et entraîne le corps rigide (12) autour de l'axe de rotation B par rapport à la base de machine (5), le corps rigide (12) étant déporté radialement, vers l'extérieur, de l'axe de rotation B,
avec un premier chariot (13) monté sur le corps rigide (12),
avec un deuxième entraînement de rotation (14) monté sur le premier chariot (13), qui génère un couple autour d'un axe de rotation C différent de l'axe de rotation B et fait tourner le système de fixation de pièce (6) autour de l'axe de rotation C
**caractérisé en ce que**
un premier entraînement linéaire monté sur le corps rigide (12) est prévu et génère une force d'entraînement linéaire le long d'un axe Xw ayant essentiellement une position radiale par rapport à l'axe de rotation B et qui déplace le premier chariot (13) sur le corps rigide (12) le long de l'axe Xw, le corps rigide (12) est longitudinal et s'étend le long d'un axe longitudinal et
le corps rigide (12) est réceptionné de telle manière au niveau du premier entraînement de rotation que son axe longitudinal a une position radiale par rapport à l'axe de rotation B.

2. Dispositif selon la revendication 1, **caractérisé en ce que** l'axe C est perpendiculaire à l'axe B.

3. Dispositif selon la revendication 1 ou 2, **caractérisé en ce que** l'axe C est parallèle à l'axe Xw.

4. Dispositif selon l'une des revendications précédentes, **caractérisé en ce que** le corps rigide (12) forme un levier.

5. Dispositif selon l'une des revendications précédentes, **caractérisé en ce que** le corps rigide (12) est équipé d'un rail de guidage le long duquel le premier chariot (13) se déplace.

6. Dispositif selon l'une des revendications précédentes, **caractérisé en ce que** le système de déplacement (7) présente un deuxième entraînement linéaire, qui génère une force d'entraînement le long d'un axe Z linéaire et déplace un deuxième chariot (8) par rapport à la base de machine (5) le long de l'axe Z.

7. Dispositif selon la revendication 6, **caractérisé en ce que** le système de déplacement (7) présente un troisième entraînement linéaire, qui génère une force d'entraînement le long d'un axe Y linéaire et déplace un troisième chariot (9) par rapport au deuxième chariot (8), le long de l'axe Y, l'axe Y étant différent de l'axe Z.

8. Dispositif selon la revendication 7 **caractérisé en ce que** le système de déplacement (7) présente un quatrième entraînement linéaire, qui génère une force d'entraînement le long d'un axe X linéaire et qui déplace un quatrième chariot (10) par rapport au troisième, le long de l'axe X, l'axe X étant différent de l'axe Z et de l'axe Y.

9. Dispositif selon la revendication 8, **caractérisé en ce que** les axes X, Y et Z sont perpendiculaires entre eux.

10. Dispositif selon la revendication 8 ou 9, **caractérisé en ce que** la première unité de rotation (11) est montée sur le quatrième chariot (10).

11. Dispositif selon la revendication 6, **caractérisé en ce que** l'axe B est essentiellement parallèle à l'un des axes X, Y ou Z.

12. Dispositif selon l'une des revendications précédentes, **caractérisé en ce que** les entraînements de tous les axes sont commandés numériquement.
